# EUROPÄISCHE PATENTSCHRIFT

(11) **EP 4 467 841 B1**
(45) Veröffentlichungstag und Bekanntmachung des Hinweises auf die Patenterteilung: **14.01.2026**
(21) Anmeldenummer: 23174815.3
(22) Anmeldetag: 23.05.2023
(51) Int. Cl.: F16G 15/04, F16G 15/02

(54) **VERBINDUNGSKETTENGLIED ZUM VERBINDEN VON ZUMINDEST ZWEI KETTENGLIEDERN EINER KETTE**
CONNECTING CHAIN LINK FOR CONNECTING AT LEAST TWO CHAIN LINKS
MAILLON DE CHAÎNE DE LIAISON POUR RELIER AU MOINS DEUX MAILLONS D'UNE CHAÎNE

(43) Veröffentlichungstag der Anmeldung: 27.11.2024
(73) Patentinhaber: Pewag Austria GmbH, 8605 Kapfenberg (AT)
(72) Erfinder: Pengg, Ägyd, 9020 Klagenfurt (AT); Fuchs, Franz, 8605 Kapfenberg (AT); Alexandru, David, 8605 Kapfenberg (AT)
(74) Vertreter: Patentanwaltskanzlei Matschnig & Forsthuber OG

(56) Entgegenhaltungen:
- WO-A1-2016/110638
- DE-B- 1 196 028
- DE-C- 68 582
- DE-C- 694 016
- GB-A- 224 694
- GB-A- 226 711
- US-A- 1 567 505

## Beschreibung

### Technisches Gebiet

Die Erfindung betrifft ein Verbindungskettenglied zum Verbinden von zumindest zwei Kettengliedern einer Kette, insbesondere einer Gliederkette oder Rundstahlkette, wobei das Verbindungskettenglied derart ausgestaltet und dazu eingerichtet ist, eine gelenkige und lösbare Verbindung zwischen zwei Kettengliedern herzustellen, wobei das Verbindungskettenglied ein Hauptelement und ein Verbindungselement aufweist, wobei in einem offenen Zustand des Verbindungskettenglieds das Hauptelement und das Verbindungselement gelöst voneinander sind, wodurch zwei zu verbindende Kettenglieder mit dem Hauptelement verbindbar sind, und in einem geschlossenen Zustand des Verbindungskettenglieds das Hauptelement und das Verbindungselement lösbar miteinander verbunden sind und eine geschlossene Form ausbilden, wobei das Hauptelement zumindest abschnittsweise einen ersten Nennquerschnitt aufweist.

### Technischer Hintergrund

Im Stand der Technik werden Kettenglieder üblicherweise mit Verbindungsgliedern verbunden, wobei ein Verbindungsglied zwei benachbarte Kettenglieder miteinander verbindet. Dabei hat das Verbindungsglied meist eine C-Form mit einem offenen Bereich, in welchen zwei zu verbindente Kettenglieder eingehängt werden können. Um eine sichere Verbindung herzustellen, muss der offene Bereich des Verbindungsglieds geschlossen werden, wobei bekannt ist, Gewindeschrauben zu verwenden, um den offenen Bereich zu verschließen. Verbindungsglieder mit Gewindeschrauben haben jedoch den Nachteil einer aufwendigen Fertigung. Ferner muss der Durchmesser der Gewindeschraube im Vergleich zum Durchmesser des Verbindungsglieds signifikant reduziert sein, um ein Einschrauben in das Verbindungsglied zu ermöglichen. Somit ist die Gewindeschraube wegen ihres verringerten Durchmessers das zumeist schwächste Glied der Zugfestigkeit des Verbindungsglieds.

Die Aufgabe der vorliegenden Erfindung besteht darin, die Nachteile des Standes der Technik zu lindern bzw. zu beseitigen. Die Erfindung setzt sich daher insbesondere zum Ziel, ein Verbindungskettenglied zu schaffen, bei welchem die Zugfestigkeit erhöht und dessen Fertigung vereinfacht ist.

In der Druckschrift DE 694016 C ist ein Verbindungskettenglied offenbart, das dem Oberbegriff des Anspruchs 1 entspricht. Obwohl GB226711A ein Verbindungskettenglied offenbart, offenbart GB226711A nicht, dass jener Abschnitt des Verbindungskettenglieds, an welchem der Kontaktabschnitt in den Kontaktgegenabschnitt eingreift, einen Verbindungsabschnitt des Verbindungskettenglieds definiert, wobei im geschlossenen Zustand der Verbindungsabschnitt einen zweiten Nennquerschnitt (D2) aufweist, welcher im Wesentlichen gleich groß ist wie der erste Nennquerschnitt (D1).

DE68582C offenbart ein Verbindungskettenglied, jedoch keine Rast-oder Schnappverbindung.

Die obengenannte Aufgabe wird durch ein Verbindungskettenglied mit den Merkmalen des Anspruchs 1 gelöst. Bevorzugte Ausführungen sind in den abhängigen Ansprüchen angegeben.

### Kurzdarstellung der Erfindung

Erfindungsgemäß ist das Verbindungselement, zum Ausbilden des geschlossenen Zustands, in einen offenen Abschnitt des Hauptelements entlang einer Einsetzrichtung einsetzbar, wobei im geschlossenen Zustand ein Kontaktabschnitt des Verbindungselements in einen, zu dem Kontaktabschnitt korrespondierend ausgebildeten, Kontaktgegenabschnitt des Hauptelements eingreift, wobei jener Abschnitt des Verbindungskettenglieds, an welchem der Kontaktabschnitt in den Kontaktgegenabschnitt eingreift, einen Verbindungsabschnitt des Verbindungskettenglieds definiert, wobei im geschlossenen Zustand der Verbindungsabschnitt einen zweiten Nennquerschnitt aufweist, welcher im Wesentlichen gleich groß ist wie der erste Nennquerschnitt.

Dadurch ergibt sich der Vorteil, dass im geschlossenen Zustand das Verbindungskettenglied, insbesondere entlang seiner gesamten geschlossenen Form, einen (im Vergleich zu einer Schraubverbindung) höheren bzw. konstanten Nennquerschnitt aufweist und somit die Zugfestigkeit des Verbindungskettenglieds erhöht wird, was wiederum die Verbindungssicherheit zwischen, mit dem Verbindungskettenglied verbundenen, Kettengliedern verbessert. In diesem Zusammenhang ist der Nennquerschnitt als Synonym für Nenndurchmesser zu verstehen. Der Nennquerschnitt bzw. Nenndurchmesser ist insbesondere definiert als die Dicke eines Kettenstrangs an einer bestimmten Stelle entlang des Kettenstrangs. Bei einem Querschnitt durch einen, ein Kettenglied ausbildenden, Kettenstrang, weist der Querschnitt eine bestimmte Nennquerschnittsfläche auf, welche eine bestimmte Geometrie, z.B. kreisförmig oder oval, aufweisen kann. Beispielsweise ist bei einer kreisförmigen Nennquerschnittsfläche der Nennquerschnitt (bzw. der Nenndurchmesser) der Durchmesser der kreisrunden Nennquerschnittsfläche. Mit anderen Worten kann der Nennquerschnitt auch als die Dicke des Kettengliedstrangs definiert werden. Durch die Ausgestaltung des Eingriffs des Kontaktabschnitts mit dem korrespondierend ausgebildeten Kontaktgegenabschnitt kann, im Vergleich zu einer Schraubverbindung, die Herstellung des Verbindungskettenglieds vereinfacht werden. Bevorzugt ist das Verbindungskettenglied aus Feinguss hergestellt, wobei dessen mechanische und metallurgische Werte jenen der zu verbindenden Kettengliedern ähnlich oder gleich sein können. Durch die Querschnittsverstärkung (bzw. die Anpassung oder Angleichung des Nennquerschnitts am Kontaktabschnitt sowie am Verbindungselement an den Nennquerschnitt des Hauptelements) des Verbindungskettenglieds und die damit erreichbare erhöhte Zugfestigkeit können beispielsweise Anlagenkomponenten auch direkt an dem Verbindungskettenglied selbst befestigt werden. Dies ist insbesondere beim Einsatz von Ketten in Geflügelschlachtanlagen von Vorteil.

Es kann vorgesehen sein, dass das Verbindungselement eine Längserstreckung aufweist, welche im eingesetzten Zustand parallel zu einem geraden Abschnitt des Hauptelements orientiert ist, wobei bevorzugt die Einsetzrichtung des Verbindungselements orthogonal zu dessen Längserstreckung orientiert ist, wobei vorzugsweise das Hauptelement eine Längserstreckung aufweist, wobei die Einsetzrichtung des Verbindungselements orthogonal zur Längserstreckung des Hauptelements orientiert ist.

Es kann vorgesehen sein, dass das Hauptelement und das Verbindungselement derart ausgestaltet sind, dass das daraus ausbildbare geschlossene Verbindungskettenglied entlang seiner Form einen konstanten Nennquerschnitt aufweist.

Erfindungsgemäß ist vorgesehen, dass der Kontaktabschnitt und der korrespondierende Kontaktgegenabschnitt, zur Fixierung des Verbindungselements in der eingesetzten Position, eine Rast- oder Schnappverbindung ausbilden. Dabei kann insbesondere durch eine Rotation des Verbindungselements um dessen Längsachse die Rast- oder Schnappverbindung von einer Fixierstellung in eine Freigabestellung bzw. von einer Freigabestellung in eine Fixierstellung überführt werden.

Es kann vorgesehen sein, dass das Hauptelement zwei einander zugewandte Endabschnitte aufweist, zwischen welchen der offene Abschnitt ausgebildet ist, in welchen das Verbindungselement einsetzbar ist, wobei der Kontaktgegenabschnitt des Hauptelements an den Endabschnitten ausgebildet ist, wobei der Kontaktabschnitt des Verbindungselements an einer dem Hauptelement zugewandten Seitenfläche des Verbindungselements ausgebildet ist, wobei im geschlossenen Zustand der Kontaktabschnitt des Verbindungselements den Kontaktgegenabschnitt des Hauptelements, insbesondere vollflächig, kontaktiert.

Es kann vorgesehen sein, dass in einer Hauptschnittebene des Verbindungskettenglieds der Kontaktgegenabschnitt, entlang einer Richtung, welche parallel zur Längserstreckung des Hauptelements orientiert ist, ein Kurvenverlauf aufweist, welcher einer Rechteckschwingung, Sägezahnschwingung, oder eine Dreiecksschwingung folgt.

Es kann vorgesehen sein, dass in der Hauptschnittebene der Kontaktabschnitt des Verbindungselements einen Kurvenverlauf aufweist, welcher zu dem Kurvenverlauf des Kontaktgegenabschnitts des Hauptelements korrespondierend ausgebildet ist, sodass im geschlossenen Zustand der Kontaktgegenabschnitt den Kontaktabschnitt vollflächig kontaktiert.

Es kann vorgesehen sein, dass das Verbindungskettenglied weiters ein Fixierelement umfasst, welches dazu eingerichtet ist, das Verbindungselement im geschlossenen Zustand zu fixieren, wobei das Fixierelement vorzugsweise einen Spannstift umfasst.

Es kann vorgesehen sein, dass das Verbindungselement eine Fixieröffnung, in welche das Fixierelement einsatzbar ist, aufweist, und zumindest ein Endabschnitt des Hauptelements eine Kontaktfläche, welche zu dem Fixierelement korrespondierend ausgebildet ist, aufweist, wobei im geschlossenen Zustand das Fixierelement in die Fixieröffnung einsetzbar ist, wobei im eingesetzten Zustand das Fixierelement die Kontaktfläche derart kontaktiert, dass eine Bewegung des Verbindungselements entgegen der Einsetzrichtung blockiert ist.

Es kann vorgesehen sein, dass das Hauptelement zwei einander gegenüberliegende Kettengliedbögen, die über einen im Wesentlichen geraden Kettengliedschenkel miteinander verbunden sind, umfasst, wobei der gerade Kettengliedschenkel den ersten Nennquerschnitt aufweist.

Es kann vorgesehen sein, dass im geschlossenen Zustand das Verbindungselement dem geraden Kettengliedschenkel gegenüberliegt.

Es kann vorgesehen sein, dass das Hauptelement im Wesentlichen C-förmig ist, wobei das Verbindungselement in den offenen Abschnitt des C-förmigen Hauptelements einsetzbar ist.

Es kann vorgesehen sein, dass im geschlossenen Zustand das Verbindungselement mit dem Hauptelement derart verbunden ist, dass das daraus gebildete Verbindungskettenglied im Wesentlichen rund, insbesondere kreisförmig oder oval, ausgestaltet ist.

Es kann vorgesehen sein, dass durch den Eingriff des Kontaktabschnitts mit dem korrespondierenden Kontaktgegenabschnitt das Verbindungselement gegen eine Rotation um dessen Längsachse, welche orthogonal zur Einsetzrichtung orientiert ist, gesichert ist.

Es kann vorgesehen sein, dass das Verbindungselement zwei Endbereiche aufweist, an welchen der Kontaktabschnitt ausgebildet ist, wobei zwischen den Endbereichen das Verbindungselement einen dritten Nennquerschnitt aufweist, welcher im Wesentlichen gleich dem ersten Nennquerschnitt ist.

### Kurzbeschreibung der Figuren

Die Erfindung wird nachstehend anhand eines bevorzugten Ausführungsbeispiels, auf das sie jedoch nicht beschränkt sein soll, noch weiter erläutert. In den Zeichnungen zeigt:
- Fig. 1: eine perspektivische Ansicht eines erfindungsgemäßen Verbindungskettenglieds im offenen Zustand;
- Fig. 2: das Verbindungskettenglied gemäß Fig. 1 im geschlossenen Zustand;
- Fig. 3: ein Schnittansicht des Verbindungskettenglieds gemäß Fig 1;
- Fig. 4a: eine zweite Ausführungsform eines Verbindungskettenglieds;
- Fig. 4b: eine weitere Ansicht des Verbindungskettenglieds gemäß Fig. 4a;
- Fig. 4c: eine weitere Ansicht des Verbindungskettenglieds gemäß Fig. 4a;
- Fig. 5a-5d: Querschnitte durch einen Verbindungsabschnitt eines erfindungsgemäßen Verbindungskettenglieds in verschiedenen Zuständen; und
- Fig. 6: eine Detailansicht eines Querschnitts einer weiteren Ausführungsform eines Verbindungskettenglieds.

### Eingehende Beschreibung der Ausführungsformen

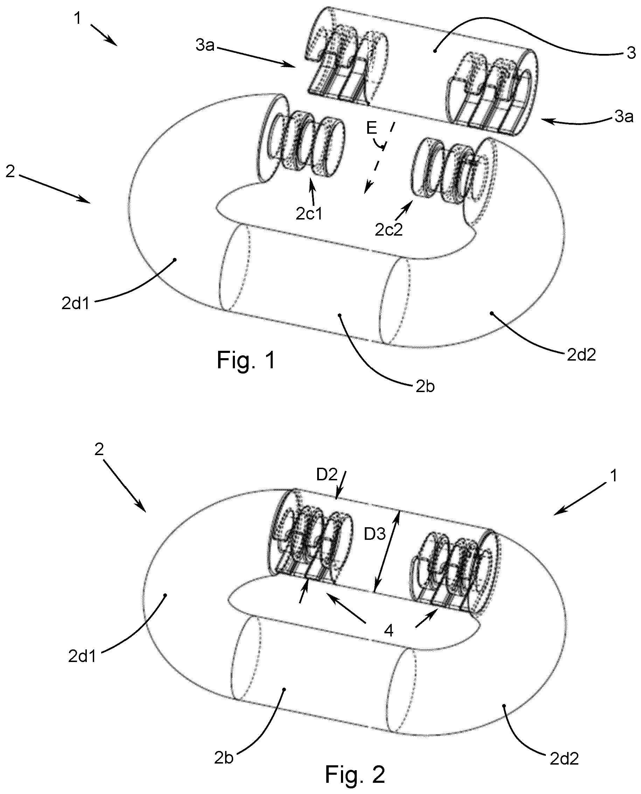

Fig. 1 zeigt eine perspektivische Ansicht eines erfindungsgemäßen Verbindungskettenglieds 1 zum Verbinden von zumindest zwei Kettengliedern einer Kette (nicht gezeigt). Die Kette kann beispielsweise eine Gliederkette oder eine Rundstahlkette sein. Das Verbindungskettenglied 1 ist derart ausgestaltet und dazu eingerichtet, eine gelenkige und lösbare Verbindung zwischen zwei Kettengliedern herzustellen. Das Verbindungskettenglied 1 umfasst ein Hauptelement 2 und ein Verbindungselement 3, wobei in einem offenen Zustand des Verbindungskettenglieds 1, welcher in Fig. 1 gezeigt ist, das Hauptelement 2 und das Verbindungselement 3 gelöst voneinander sind. Dadurch können zwei zu verbindende Kettenglieder mit dem Hauptelement 2 verbunden werden bzw. in das Hauptelement 2 eingehängt werden. Das Hauptelement 2 ist im Wesentlichen C-förmig, wobei das Verbindungselement 3 in den offenen Abschnitt des C-förmigen Hauptelements 2 einsetzbar ist. Das Hauptelement 2 kann eine beliebige offene Form aufweisen (z.B. U-förmig, V-förmig, halbkreisförmig, etc.), wobei ein offener Abschnitt der offenen Form mit dem Verbindungselement 3 verschließbar ist.

In Fig. 2 ist ein geschlossener Zustand des Verbindungskettenglieds 1 gezeigt. Dabei sind das Hauptelement 2 und das Verbindungselement 3 (lösbar) miteinander verbunden und bilden somit eine geschlossene Form aus. Das Hauptelement 2 hat zumindest abschnittsweise einen ersten Nennquerschnitt D1.

Um den geschlossenen Zustand auszubilden, ist das Verbindungselement 3 in den offenen Abschnitt des Hauptelements 2 entlang einer Einsetzrichtung E einsetzbar. Im geschlossenen Zustand greift ein Kontaktabschnitt 3a des Verbindungselements 3 in einen, zu dem Kontaktabschnitt 3a korrespondierend ausgebildeten, Kontaktgegenabschnitt 2a des Hauptelements 2 ein. Jener Abschnitt des Verbindungskettenglieds 1, an welchem der Kontaktabschnitt 3a in den Kontaktgegenabschnitt 2a eingreift, definiert einen Verbindungsabschnitt 4 des Verbindungskettenglieds 1. Im geschlossenen Zustand weist der Verbindungsabschnitt 4 einen zweiten Nennquerschnitt D2 auf, welcher im Wesentlich gleich groß ist wie der erste Nennquerschnitt D1.

Das Hauptelement 2 umfasst zwei einander zugewandte Endabschnitte 2c1, 2c2, zwischen welchen der offene Abschnitt ausgebildet ist, in welchen das Verbindungselement 3 einsetzbar ist. Der Kontaktgegenabschnitt 2a des Hauptelements 2 ist an den Endabschnitten 2c1, 2c2 ausgebildet. Der Kontaktabschnitt 3a des Verbindungselements 3 ist an einer dem Hauptelement 2 zugewandten Seitenfläche des Verbindungselements 3 ausgebildet. Im geschlossenen Zustand kontaktiert der Kontaktabschnitt 3a des Verbindungselements 3 den Kontaktgegenabschnitt 2a des Hauptelements 2, bevorzugt vollflächig.

In dem gezeigten Ausführungsbeispiel weist das Hauptelement 2 zwei einander gegenüberliegende Kettengliedbögen 2d1, 2d2 auf, die über einen geraden Abschnitt 2b des Hauptelements 2 miteinander verbunden sind, auf. Der gerade Abschnitt 2b ist in dem gezeigten Beispiel ein gerader Kettengliedschenkel. Ferner weist der gerade Abschnitt 2b den ersten Nennquerschnitt D1 auf.

Das Hauptelement 2 und das Verbindungselement 3 sind derart ausgestaltet, dass das daraus ausbildbare geschlossene Verbindungskettenglied 1 entlang seiner Form einen konstanten Nennquerschnitt aufweist.

Das Verbindungselement 3 hat eine Längserstreckung L2, welche im eingesetzten Zustand parallel zu dem geraden Abschnitt 2b des Hauptelements 2 orientiert ist. Die Einsetzrichtung E des Verbindungselements 3 ist orthogonal zu dessen Längserstreckung L2 orientiert. Vorzugsweise hat das Hauptelement 2 eine Längserstreckung L1, wobei die Einsetzrichtung E des Verbindungselements 3 auch orthogonal zur Längserstreckung L1 des Hauptelements 2 orientiert ist.

Das Verbindungselement 3 umfasst weiters zwei Endbereiche, an welchen der Kontaktabschnitt 3a ausgebildet ist, wobei zwischen den Endbereichen das Verbindungselement 3 einen dritten Nennquerschnitt D3 aufweist, welcher im Wesentlichen gleich dem ersten Nennquerschnitt D1 ist.

Im geschlossenen Zustand liegt das Verbindungselement 3 dem geraden Abschnitt 2b gegenüber. Ferner ist im geschlossenen Zustand das Verbindungselement 3 mit dem Hauptelement 2 derart verbunden, dass das daraus gebildete Verbindungskettenglied 1 im Wesentlichen rund, insbesondere kreisförmig oder oval, ausgestaltet ist. Das Hauptelement 2 und das Verbindungselement 3 können im zusammengesetzten Zustand im Wesentlichen die Form eines Kettenglieds aufweisen.

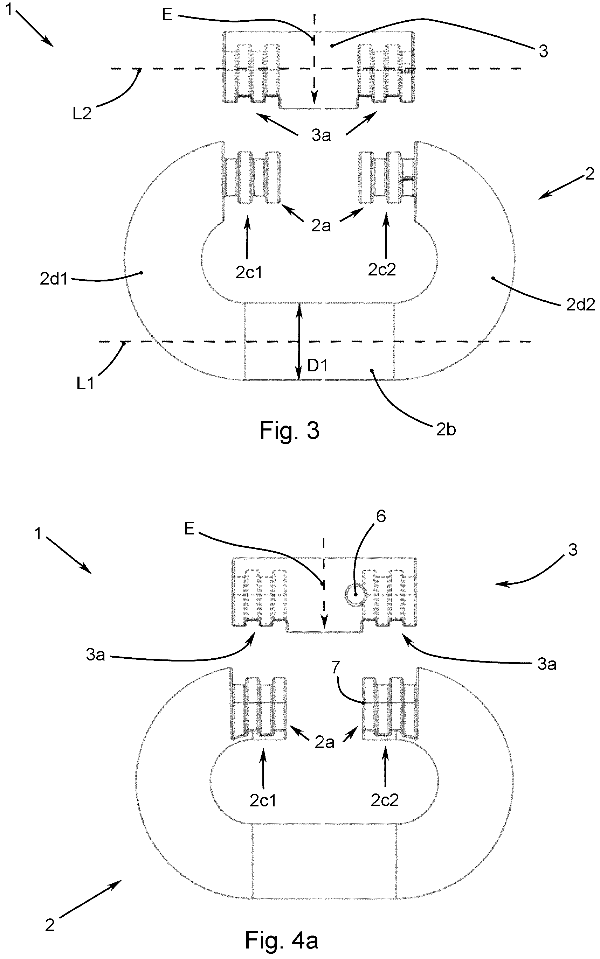

Wie in Fig. 3 gezeigt, folgt, in einer Hauptschnittebene des Verbindungskettenglieds 1, der Kontaktgegenabschnitt 2a, entlang einer Richtung, welche parallel zur Längserstreckung L1 des Hauptelements 2 orientiert ist, einem Kurvenverlauf. Der Kurvenverlauf ist als Rechteckschwingung, Sägezahnschwingung, oder als eine Dreiecksschwingung beschreibbar.

In der Hauptschnittebene folgt auch der Kontaktabschnitt 3a des Verbindungselements 3 einem Kurvenverlauf, welcher zu dem Kurvenverlauf des Kontaktgegenabschnitts 2a des Hauptelements 2 korrespondierend ausgebildet ist, sodass im geschlossenen Zustand der Kontaktgegenabschnitt 2a den Kontaktabschnitt 3a vollflächig kontaktiert.

Fig. 4a bis 4c zeigen Ansichten einer zweiten Ausführungsform eines erfindungsgemäßen Verbindungskettenglieds 1, umfassend ein Fixierelement 5, welches dazu eingerichtet ist, das Verbindungselement 3 im geschlossenen Zustand zu fixieren, wobei das Fixierelement 5 vorzugsweise ein Spannstift ist.

Das Verbindungselement 3 hat hierfür eine Fixieröffnung 6, in welche das Fixierelement 5 einsatzbar ist. Zumindest ein Endabschnitt 2c2 des Hauptelements 2 hat eine Kontaktfläche 7, welche zu dem Fixierelement 5 korrespondierend ausgebildet ist. Im geschlossenen Zustand ist das Fixierelement 5 in die Fixieröffnung 6 einsetzbar. Im eingesetzten Zustand kontaktiert das Fixierelement 5 die Kontaktfläche 7 derart, dass eine Bewegung des Verbindungselements 3 entgegen der Einsetzrichtung E blockiert ist.

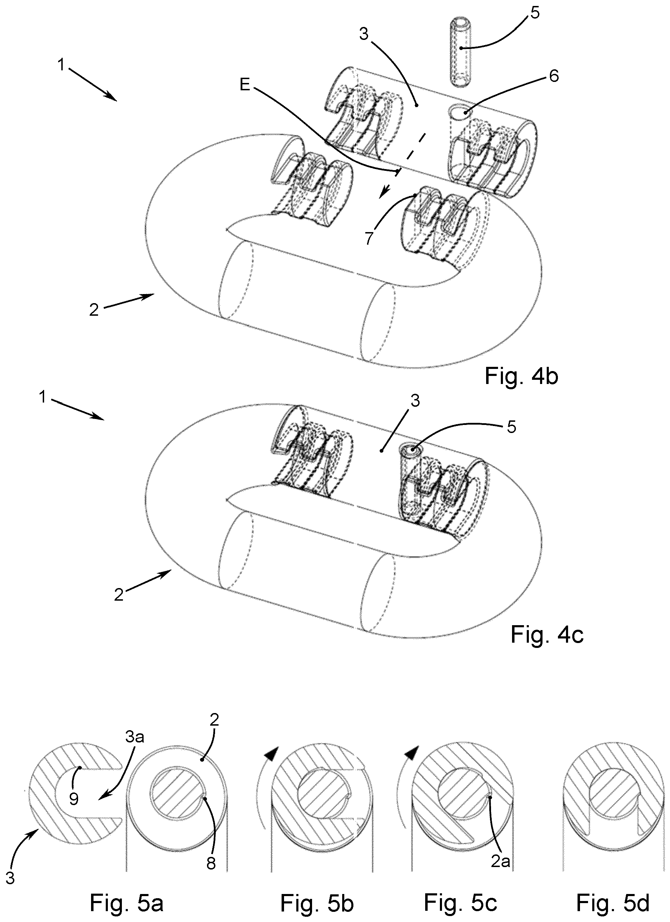

Fig. 4a zeigt eine Seitenansicht des offenen Zustands. Fig. 4b zeigt eine perspektivische Ansicht des offenen Zustands mit einem nicht eingesetzten Fixierelement 5. Fig. 4c zeigt den geschlossenen Zustand, wobei das Fixierelement 5 in die Fixieröffnung 6 einsetzt ist.

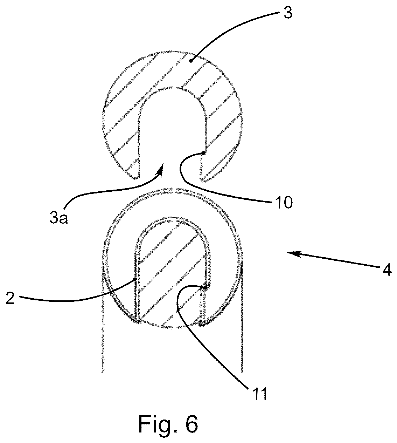

Eine andere Fixierart für das Verbindungselement 3 an dem Hauptelement 2 ist in den Fig. 5a bis 5d und Fig. 6 gezeigt. Durch einen Rast- oder Schnappeingriff des Kontaktabschnitts 3a mit dem korrespondierenden Kontaktgegenabschnitt 2a kann das Verbindungselement 3 gegen eine Rotation um dessen Längsachse gesichert werden.

Wie in den Fig. 5a bis 5d gezeigt, bilden der Kontaktabschnitt 3a und der korrespondierende Kontaktgegenabschnitt 2a zur Fixierung des Verbindungselements 3 in der eingesetzten Position eine Rast- oder Schnappverbindung aus. Durch eine Rotation des Verbindungselements um dessen Längsachse ist die Rast- oder Schnappverbindung von einer Fixierstellung in eine Freigabestellung bzw. von einer Freigabestellung in eine Fixierstellung überführbar. In der Fixierstellung rastet eine Rastnase 8 an dem Kontaktgegenabschnitt 2a in eine Rastausnehmung 9 an dem Kontaktabschnitt 3a ein. In den Fig. 5a bis 5d ist jeweils ein Querschnitt durch den Verbindungsabschnitt 4 gezeigt. In Fig. 5a ist der offene Zustand gezeigt. In Fig. 5b ist das Verbindungselement 3 in das Hauptelement 2 eingesetzt. In Fig. 5c ist das Verbindungselement 3 relativ zu dem Hauptelement 2 um einen ersten Winkel verdreht (die Rotationsrichtung ist durch einen Pfeil angedeutet). In Fig. 5d ist das Verbindungselement 3 relativ zu dem Hauptelement 2 um einen zweiten, größeren, Winkel verdreht, dadurch ist die Rast- bzw. Schnappverbindung eingerastet und das Verbindungselement 3 ist an dem Hauptelement 2 fixiert.

Um die Rast- bzw. Schnappverbindung zu lösen, kann das Verbindungselement in die umgekehrte Richtung rotiert werden, wobei dabei eine Entriegelungskraft überwunden werden muss, um die Rast- bzw. Schnappverbindung zu entriegeln.

Fig. 6 zeigt eine alternative Variante der Rast- oder Schnappverbindung zwischen dem Kontaktabschnitt 3a und dem Kontaktgegenabschnitt 2a. Der in Fig. 6 gezeigte Querschnitt durch den Verbindungsabschnitt 4 zeigt den offenen Zustand. Das im Querschnitt im Wesentlichen C-förmige Verbindungselement 3 ist an dem Kontaktgegenabschnitt 2a des Hauptelements 2 einsetzbar, wobei zur Fixierung des Verbindungselements 3 ein an dem Kontaktanschnitt 3a ausgebildeter Vorsprung 10 an einer Einbuchtung 11, welche an dem Kontaktgegenabschnitt 2a ausgebildet ist, einschnappen kann. Diese Fixierung erfolgt, im Vergleich zur Fixierung gemäß Fig. 5a bis 5d, rotationsfrei.

## Patentansprüche

1. Verbindungskettenglied (1) zum Verbinden von zumindest zwei Kettengliedern einer Kette, insbesondere einer Gliederkette oder Rundstahlkette, wobei das Verbindungskettenglied (1) derart ausgestaltet und dazu eingerichtet ist, eine gelenkige und lösbare Verbindung zwischen zwei Kettengliedern herzustellen, wobei das Verbindungskettenglied (1) ein Hauptelement (2) und ein Verbindungselement (3) aufweist, wobei in einem offenen Zustand des Verbindungskettenglieds (1) das Hauptelement (2) und das Verbindungselement (3) gelöst voneinander sind, wodurch zwei zu verbindende Kettenglieder mit dem Hauptelement (2) verbindbar sind, und in einem geschlossenen Zustand des Verbindungskettenglieds (1) das Hauptelement (2) und das Verbindungselement (3) lösbar miteinander verbunden sind und eine geschlossene Form ausbilden, wobei das Hauptelement (2) zumindest abschnittsweise einen ersten Nennquerschnitt (D1) aufweist,
wobei das Verbindungselement (3), zum Ausbilden des geschlossenen Zustands, in einen offenen Abschnitt des Hauptelements (2) entlang einer Einsetzrichtung (E) einsetzbar ist, wobei im geschlossenen Zustand ein Kontaktabschnitt (3a) des Verbindungselements (3) in einen, zu dem Kontaktabschnitt (3a) korrespondierend ausgebildeten, Kontaktgegenabschnitt (2a) des Hauptelements (2) eingreift, wobei jener Abschnitt des Verbindungskettenglieds (1), an welchem der Kontaktabschnitt (3a) in den Kontaktgegenabschnitt (2a) eingreift, einen Verbindungsabschnitt (4) des Verbindungskettenglieds (1) definiert, wobei im geschlossenen Zustand der Verbindungsabschnitt (4) einen zweiten Nennquerschnitt (D2) aufweist, welcher im Wesentlichen gleich groß ist wie der erste Nennquerschnitt (D1).
**dadurch gekennzeichnet, dass** der Kontaktabschnitt (3a) und der korrespondierend ausgebildete Kontaktgegenabschnitt (2a), zur Fixierung des Verbindungselements (3) in der eingesetzten Position, eine Rast- oder Schnappverbindung ausbilden.

2. Verbindungskettenglied nach Anspruch 1, wobei das Verbindungselement (3) eine Längserstreckung (L2) aufweist, welche im eingesetzten Zustand parallel zu einem geraden Abschnitt (2b) des Hauptelements (2) orientiert ist, wobei bevorzugt die Einsetzrichtung (E) des Verbindungselements (3) orthogonal zu dessen Längserstreckung (L2) orientiert ist, wobei vorzugsweise das Hauptelement (2) eine Längserstreckung (L1) aufweist, wobei die Einsetzrichtung (E) des Verbindungselements (3) orthogonal zur Längserstreckung (L1) des Hauptelements (2) orientiert ist.

3. Verbindungskettenglied nach einem der vorhergehenden Ansprüche, wobei das Hauptelement (2) und das Verbindungselement (3) derart ausgestaltet sind, dass das daraus ausbildbare geschlossene Verbindungskettenglied (1) entlang seiner Form einen konstanten Nennquerschnitt aufweist.

4. Verbindungskettenglied nach einem der vorhergehenden Ansprüche, wobei durch eine Rotation des Verbindungselements um dessen Längsachse die Rast- oder Schnappverbindung von einer Fixierstellung in eine Freigabestellung bzw. von einer Freigabestellung in eine Fixierstellung überführbar ist.

5. Verbindungskettenglied nach einem der vorhergehenden Ansprüche, wobei das Hauptelement (2) zwei einander zugewandte Endabschnitte (2c1, 2c2) aufweist, zwischen welchen der offene Abschnitt ausgebildet ist, in welchen das Verbindungselement (3) einsetzbar ist, wobei der Kontaktgegenabschnitt (2a) des Hauptelements (2) an den Endabschnitten (2c1, 2c2) ausgebildet ist, wobei der Kontaktabschnitt (3a) des Verbindungselements (3) an einer dem Hauptelement (2) zugewandten Seitenfläche des Verbindungselements (3) ausgebildet ist, wobei im geschlossenen Zustand der Kontaktabschnitt (3a) des Verbindungselements (3) den Kontaktgegenabschnitt (2a) des Hauptelements (2), insbesondere vollflächig, kontaktiert.

6. Verbindungskettenglied nach Anspruch 5, wobei in einer Hauptschnittebene des Verbindungskettenglieds (1) der Kontaktgegenabschnitt (2a), entlang einer Richtung, welche parallel zur Längserstreckung (L1) des Hauptelements (2) orientiert ist, ein Kurvenverlauf aufweist, welcher einer Rechteckschwingung, Sägezahnschwingung, oder eine Dreiecksschwingung folgt.

7. Verbindungskettenglied nach Anspruch 6, wobei in der Hauptschnittebene der Kontaktabschnitt (3a) des Verbindungselements (3) einen Kurvenverlauf aufweist, welcher zu dem Kurvenverlauf des Kontaktgegenabschnitts (2a) des Hauptelements (2) korrespondierend ausgebildet ist, sodass im geschlossenen Zustand der Kontaktgegenabschnitt (2a) den Kontaktabschnitt (3a) vollflächig kontaktiert.

8. Verbindungskettenglied nach einem der vorhergehenden Ansprüche, umfassend ein Fixierelement (5), welches dazu eingerichtet ist, das Verbindungselement (3) im geschlossenen Zustand zu fixieren, wobei das Fixierelement (5) vorzugsweise einen Spannstift umfasst.

9. Verbindungskettenglied nach Anspruch 8, wobei das Verbindungselement (3) eine Fixieröffnung (6), in welche das Fixierelement (5) einsatzbar ist, aufweist, und zumindest ein Endabschnitt (2c1, 2c2) des Hauptelements (2) eine Kontaktfläche (7), welche zu dem Fixierelement (5) korrespondierend ausgebildet ist, aufweist, wobei im geschlossenen Zustand das Fixierelement (5) in die Fixieröffnung (6) einsetzbar ist, wobei im eingesetzten Zustand das Fixierelement (5) die Kontaktfläche (7) derart kontaktiert, dass eine Bewegung des Verbindungselements (3) entgegen der Einsetzrichtung (E) blockiert ist.

10. Verbindungskettenglied nach einem der vorhergehenden Ansprüche, wobei das Hauptelement (2) zwei einander gegenüberliegende Kettengliedbögen (2d1, 2d2), die über den geraden Abschnitt (2b) des Hauptelements (2), welcher insbesondere ein gerader Kettengliedschenkel ist, miteinander verbunden sind, umfasst, wobei der gerade Abschnitt (2b) den ersten Nennquerschnitt (D1) aufweist.

11. Verbindungskettenglied nach Anspruch 10, wobei im geschlossenen Zustand das Verbindungselement (3) dem geraden Abschnitt (2b) gegenüberliegt.

12. Verbindungskettenglied nach einem der vorhergehenden Ansprüche, wobei das Hauptelement (2) im Wesentlichen C-förmig ist, wobei das Verbindungselement (3) in den offenen Abschnitt des C-förmigen Hauptelements (2) einsetzbar ist.

13. Verbindungskettenglied nach einem der vorhergehenden Ansprüche, wobei im geschlossenen Zustand das Verbindungselement (3) mit dem Hauptelement (2) derart verbunden ist, dass das daraus gebildete Verbindungskettenglied (1) im Wesentlichen rund, insbesondere kreisförmig oder oval, ausgestaltet ist.

14. Verbindungskettenglied nach einem der vorhergehenden Ansprüche, wobei durch den Eingriff des Kontaktabschnitts (3a) mit dem korrespondierenden Kontaktgegenabschnitt (2a) das Verbindungselement (3) gegen eine Rotation um dessen Längsachse, welche orthogonal zur Einsetzrichtung (E) orientiert ist, gesichert ist.

15. Verbindungskettenglied nach einem der vorhergehenden Ansprüche, wobei das Verbindungselement (3) zwei Endbereiche aufweist, an welchen der Kontaktabschnitt (3a) ausgebildet ist, wobei zwischen den Endbereichen das Verbindungselement (3) einen dritten Nennquerschnitt (D3) aufweist, welcher im Wesentlichen gleich dem ersten Nennquerschnitt (D1) ist.

## Claims

1. Connecting chain link (1) for connecting at least two chain links of a chain, such as a link chain or round steel chain, wherein the connecting chain link (1) is designed and configured to produce an articulated and detachable connection between two chain links, wherein the connecting chain link (1) comprises a main element (2) and a connecting element (3), wherein, in an open state of the connecting chain link (1), the main element (2) and the connecting element (3) are detached from each other, allowing connecting, to the main element (2), two chain links that are to be linked, and in a closed state of the connecting chain link (1), the main element (2) and the connecting element (3) are detachably joined and form a closed shape, wherein the main element (2) has a first nominal cross-section (D1) at least in a portion thereof,
wherein the connecting element (3) is insertable into an clearance of the main element (2) along an insertion direction (E) to form the closed state, wherein in the closed state a contact segment (3a) of the connecting element (3) engages with a contact counterpart segment (2a) of the main element (2), having a matching shape with respect to the contact segment (3a), wherein the segment of the connecting chain link (1) where the contact segment (3a) engages the contact counterpart segment (2a) defines a connection segment (4) of the connecting chain link (1), the connection segment (4) having, in the closed state, a second nominal cross-section (D2) which is substantially the same size as the first nominal cross-section (D1),
**characterized in that** the contact segment (3a) and the contact counterpart segment (2a) configured correspondingly thereto form a latching or snap connection to fix the connecting element (3) in the inserted position.

2. Connecting chain link according to claim 1, wherein the connecting element (3) has a longitudinal extension (L2) which, when inserted, is oriented parallel to a straight segment (2b) of the main element (2), wherein the insertion direction (E) of the connecting element (3) is oriented preferably orthogonally to its longitudinal extension (L2), wherein preferably the main element (2) has a longitudinal extension (L1), the insertion direction (E) of the connecting element (3) being oriented orthogonally to the longitudinal extension (L1) of the main element (2).

3. Connecting chain link according to any one of the preceding claims, wherein the main element (2) and the connecting element (3) are configured such that the connecting chain link (1) in closed state that can be formed therefrom has a constant nominal cross-section along its shape.

4. Connecting chain link according to any one of the preceding claims, wherein by rotating the connecting element about its longitudinal axis the latching or snap connection can be taken from a fixed state to a detachable state or from a state to a fixed state.

5. Connecting chain link according to any one of the preceding claims, wherein the main element (2) comprises two end portions (2c1, 2c2) which are facing each other and between which the clearance, into which the connecting element (3) is insertable, is formed, wherein the contact counterpart segment (2a) of the main element (2) is provided on the end portions (2c1, 2c2), wherein the contact segment (3a) of the connecting element (3) is provided on a side surface of the connecting element (3) that faces the main element (2), wherein the contact segment (3a) of the connecting element (3) contacts, in the closed state, the contact counterpart segment (2a) of the main element (2), and in a particular case over its entire surface.

6. Connecting chain link according to claim 5, wherein in a main section plane of the connecting chain link (1), the contact counterpart segment (2a) has, seen along a direction oriented parallel to the longitudinal extension (L1) of the main element (2), a curved shape which follows a rectangular wave, a sawtooth wave, or a triangular wave.

7. Connecting chain link according to claim 6, wherein in said main section plane, the contact segment (3a) of the connecting element (3) has a curved shape that corresponds to the curved shape of the contact counterpart segment (2a) of the main element (2), so that in the closed state the contact counterpart segment (2a) is in full-area contact with the contact segment (3a).

8. Connecting chain link according to any one of the preceding claims, comprising a fixing element (5) which is configured to fix the connecting element (3) in the closed state, wherein the fixing element (5) preferably comprises a clamping pin.

9. Connecting chain link according to claim 8, wherein the connecting element (3) comprises a fixing opening (6) configured for insertion of the fixing element (5) and at least one end portion (2c1, 2c2) of the main element (2) comprises a contact surface (7) having a shape matching the fixing element (5), wherein in the closed state, the fixing element (5) is insertable into the fixing opening (6), wherein in the inserted state, the fixing element (5) contacts the contact surface (7) so as to block movement of the connecting element (3) against the insertion direction (E).

10. Connecting chain link according to any one of the preceding claims, wherein the main element (2) comprises two opposing chain link arcs (2d1, 2d2), which are connected to each other via the straight segment (2b) of the main element (2), said straight segment being, in a particular case, a straight chain link leg, said straight segment (2b) having the first nominal cross-section (D1).

11. Connecting chain link according to claim 10, wherein, in the closed state, the connecting element (3) is located opposing the straight segment (2b).

12. Connecting chain link according to any one of the preceding claims, wherein the main element (2) is substantially C-shaped, wherein the connecting element (3) is insertable into the clearance of the C-shaped main element (2).

13. Connecting chain link according to any one of the preceding claims, wherein, in the closed state, the connecting element (3) is connected to the main element (2) in such a way that the connecting chain link (1) formed therefrom is substantially round, such as circular or oval.

14. Connecting chain link according to any one of the preceding claims, wherein the connecting element (3) is secured against rotation about its longitudinal axis, which is oriented orthogonally to the insertion direction (E), by the engagement of the contact segment (3a) with the corresponding contact counter-section (2a).

15. Connecting chain link according to any one of the preceding claims, wherein the connecting element (3) has two end regions where the contact segment (3a) is formed, wherein between the end regions the connecting element (3) has a third nominal cross-section (D3), which is substantially equal to the first nominal cross-section (D1).

## Revendications

1. Maillon de liaison (1) destiné à relier au moins deux maillons d'une chaîne, telle qu'une chaîne à maillons ou chaîne en acier rond, le maillon de liaison (1) étant configuré et conçu pour établir une liaison articulée et amovible entre deux maillons de chaîne, le maillon de liaison (1) comportant un élément principal (2) et un élément de liaison (3), par lequel dans un état ouvert du maillon de liaison (1), l'élément principal (2) et l'élément de liaison (3) sont séparés l'un de l'autre, permettant de relier deux maillons à relier à l'élément principal (2), et dans un état fermé du maillon de liaison (1), l'élément principal (2) et l'élément de liaison (3) sont joints de manière amovible l'un à l'autre et forment une forme fermée, l'élément principal (2) présentant au moins par sections une première section transversale nominale (D1),
l'élément de liaison (3) pouvant être inséré dans une partie ouverte de l'élément principal (2) le long d'une direction d'insertion (E) afin de former l'état fermé, dans l'état fermé une partie de contact (3a) de l'élément de liaison (3) s'engageant dans une contre-partie de contact (2a) de l'élément principal (2) formée de manière correspondante à la partie de contact (3a), la partie du maillon de liaison (1) au niveau de laquelle la partie de contact (3a) s'engage dans la partie de contact opposée (2a) définissant une partie de liaison (4) du maillon de liaison (1), la partie de liaison (4) présentant, à l'état fermé, une deuxième section transversale nominale (D2) qui est sensiblement de même taille que la première section transversale nominale (D1),
**caractérisé en ce que** la partie de contact (3a) et la contre-partie de contact en formée correspondante (2a) forment un assemblage par encliquetage ou enclenchement afin de fixer l'élément de liaison (3) dans la position insérée.

2. Maillon de chaîne de liaison selon la revendication 1, dans lequel l'élément de liaison (3) présente une extension longitudinale (L2) qui, à l'état inséré, est orientée parallèlement à une section droite (2b) de l'élément principal (2), la direction d'insertion (E) de l'élément de liaison étant de préférence (3) orientée orthogonalement à son extension longitudinale (L2), l'élément principal (2) présentant de préférence une extension longitudinale (L1), la direction d'insertion (E) de l'élément de liaison (3) étant orientée orthogonalement à l'extension longitudinale (L1) de l'élément principal (2).

3. Maillon de chaîne de liaison selon l'une quelconque des revendications précédentes, l'élément principal (2) et l'élément de liaison (3) étant conçus de telle sorte que le maillon de chaîne de liaison fermé (1) qui peut être formé à partir de ceux-ci présente une section transversale nominale constante le long de sa forme.

4. Maillon de chaîne de liaison selon l'une quelconque des revendications précédentes, dans lequel une rotation de l'élément de liaison autour de son axe longitudinal permet de faire passer la liaison par encliquetage ou par enclenchement d'une position de fixation à une position de libération ou d'une position de libération à une position de fixation.

5. Maillon de chaîne de liaison selon l'une quelconque des revendications précédentes, dans lequel l'élément principal (2) présente deux parties d'extrémité (2c1, 2c2) tournées l'une vers l'autre, entre lesquelles est formée la partie ouverte dans laquelle l'élément de liaison (3) peut être inséré, la contre-partie de contact (2a) de l'élément principal (2) étant formée au niveau des parties d'extrémité (2c1, 2c2), la partie de contact (3a) de l'élément de liaison (3) étant formée sur une surface latérale de l'élément de liaison (3) tournée vers l'élément principal (2), et à l'état fermé la partie de contact (3a) de l'élément de liaison (3) étant en contact, en particulier sur toute sa surface, avec la contre-partie de contact (2a) de l'élément principal (2).

6. Maillon de chaîne de liaison selon la revendication 5, dans lequel, dans un plan de coupe principal du maillon de chaîne de liaison (1), la contre-partie de contact (2a) présente, le long d'une direction orientée parallèlement à l'extension longitudinale (L1) de l'élément principal (2), une courbe qui suit une oscillation rectangulaire, une oscillation en dents de scie ou une oscillation triangulaire.

7. Maillon de chaîne de liaison selon la revendication 6, dans lequel, dans ledit plan de coupe principal, la partie de contact (3a) de l'élément de liaison (3) présente une courbe qui correspond à la courbe de la contre-partie de contact (2a) de l'élément principal (2), de sorte que, à l'état fermé, la contre-partie de contact (2a) est en contact sur toute sa surface avec la partie de contact (3a).

8. Maillon de chaîne de liaison selon l'une quelconque des revendications précédentes, comprenant un élément de fixation (5) qui est conçu pour fixer l'élément de liaison (3) à l'état fermé, de préférence l'élément de fixation (5) comprenant une goupille de serrage.

9. Maillon de chaîne de liaison selon la revendication 8, dans lequel l'élément de liaison (3) présente une ouverture de fixation (6) dans laquelle l'élément de fixation (5) peut être inséré, et au moins une partie d'extrémité (2c1, 2c2) de l'élément principal (2) présente une surface de contact (7) qui est conçue de manière correspondante à l'élément de fixation (5), l'élément de fixation (5) pouvant être inséré dans l'ouverture de fixation (6) à l'état fermé, l'élément de fixation (5) entrant en contact avec la surface de contact (7) à l'état inséré de telle sorte qu'un mouvement de l'élément de liaison (3) dans le sens opposé au sens d'insertion (E) est bloqué.

10. Maillon de chaîne de liaison selon l'une quelconque des revendications précédentes, dans lequel l'élément principal (2) comprend deux arcs de maillon de chaîne (2d1, 2d2) opposés l'un à l'autre et reliés entre eux par la partie droite (2b) de l'élément principal (2), ladite partie droite étant en particulier une branche droite de maillon, la partie droite (2b) présentant la première section transversale nominale (D1).

11. Maillon de liaison selon la revendication 10, dans lequel, à l'état fermé, l'élément de liaison (3) est opposé à la partie droite (2b).

12. Maillon de liaison selon l'une quelconque des revendications précédentes, dans lequel l'élément principal (2) est essentiellement en forme de C, l'élément de liaison (3) pouvant être inséré dans la partie ouverte de l'élément principal (2) en forme de C.

13. Maillon de chaîne de liaison selon l'une quelconque des revendications précédentes, dans lequel, à l'état fermé, l'élément de liaison (3) est relié à l'élément principal (2) de telle sorte que le maillon de chaîne de liaison (1) ainsi formé est essentiellement rond, tel que circulaire ou ovale.

14. Maillon de chaîne de liaison selon l'une quelconque des revendications précédentes, dans lequel, l'engagement de la partie de contact (3a) avec la partie de contact correspondante (2a) empêchent l'élément de liaison (3) de tourner autour de son axe longitudinal, qui est orienté orthogonalement à la direction d'insertion (E).

15. Maillon de chaîne de liaison selon l'une quelconque des revendications précédentes, dans lequel l'élément de liaison (3) présente deux zones d'extrémité sur lesquelles est formée la partie de contact (3a), l'élément de liaison (3) présentant entre les zones d'extrémité une troisième section nominale (D3) qui est sensiblement égale à la première section nominale (D1).
